(19)

Europäisches
Patentamt
European
Patent Office
Office européen
des brevets

(11) **EP 0 978 183 B1**

(12) **EUROPEAN PATENT SPECIFICATION**

(45) Date of publication and mention
of the grant of the patent:
**18.07.2007 Bulletin 2007/29**

(51) Int Cl.:
**H04L 27/01** *(2006.01)*

(21) Application number: **98917151.7**

(22) Date of filing: **21.04.1998**

(86) International application number:
**PCT/FI1998/000353**

(87) International publication number:
**WO 1998/048545 (29.10.1998 Gazette 1998/43)**

(54) **METHOD AND APPARATUS FOR PROCESSING A SIGNAL IN A TELECOMMUNICATION APPARATUS**

VERFAHREN UND EINRICHTUNG ZUR VERARBEITUNG EINES SIGNALS IN EINER TELEKOMMUNIKATIONSEINRICHTUNG

PROCEDE ET APPAREIL POUR LE TRAITEMENT D'UN SIGNAL DANS UN APPAREIL DE TELECOMMUNICATION

(84) Designated Contracting States:
**DE ES FR GB IT NL SE**

(30) Priority: **24.04.1997 FI 971760**

(43) Date of publication of application:
**09.02.2000 Bulletin 2000/06**

(73) Proprietor: **Tellabs Oy**
**02630 Espoo (FI)**

(72) Inventor: **LAAMANEN, Heikki**
**FIN-02230 Espoo (FI)**

(74) Representative: **Lipsanen, Jari Seppo Einari et al**
**Seppo Laine Oy,**
**Itämerenkatu 3 B**
**00180 Helsinki (FI)**

(56) References cited:
**CA-A- 2 153 641**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

The invention relates to a method for processing a signal in a telecommunication apparatus.

The invention also relates to an apparatus for processing a signal in a telecommunication apparatus.

Ever-increasing speeds will be used for transfer via a subscriber line of copper. An ETSI team is currently working on the definition of the so called VDSL modem (Very high speed Digital Subscriber Line) where the greatest transfer speed may reach as high as 52 Mbit/s. Hereby the bandwidth of the modulated signal may even be in the range of 10 MHz.

With a bandwidth of several MHz different kinds of radio frequency interference begin to pose problems particularly in countries where aerial cables are used as subscriber lines (for instance in the Finnish countryside). The modem receiver may be interfered with by AM radio stations and radio amateur stations whose transmitted radio waves may be connected to the aerial cable, partly becoming so called transversal interference in a twisted pair and being conveyed to the modem receiver, interfering with it. A modem may, on the other hand, interfere with listening in on AM radio channels or with a radio amateur's reception because a modulated signal travelling in a twisted pair contains power at said radio frequencies and this power is partly emitted into the environment.

Problematic radio bands are listed in Table 1.

TABLE 1

| International radio amateur bands | |
| --- | --- |
| Beginning of band (MHz) | End of band (MHz) |
| | |
| 1.810 | 2.000 |
| 3.500 | 3.800 |
| 7.000 | 7.100 |
| 10.100 | 10.150 |
| 14.000 | 14.350 |
| 18.068 | 18.168 |
| 21.000 | 21.450 |
| 24.890 | 24.990 |
| 28.000 | 29.700 |

Radio interference caused by a transmitter may be eliminated by removing by filtering from the spectrum of a modulated signal the frequencies which are within the bands causing problems.

Radio interference connected to the cable, causing problems in the receiver, can be filtered by using suitable band stop filters which may be analog or digital or both. In fast modems signal processing is mainly digital wherefore a received signal is converted into numeric form by means of an analog-to-digital converter (A/D converter). As the level of the radio interference may be high compared to the received effective signal, it would be of advantage for the dynamics of the A/D converter if at least a part of the radio interference filtering took place before the A/D conversion by means of a band stop filter implemented using analog techniques.

The operation of the adaptive line equalizer is made difficult if a modem signal is filtered in the transmitter, the receiver or both, because the filters change the transfer function and the impulse response or the so called system response of the entire signal path. Filters give rise to additional distortion which even contains transmission zeros in the problematic radio frequency bands. Band stop filters of narrow bandwidth are particularly problematic from the point of view of receiver equalizers because equalizing them requires time-wise very long adaptive equalizers.

Reference /1/ (p. 574 to 577) describes a mechanism in the transmitter of a modem by means of which it is possible to provide transmission zeros in the transmission spectrum at desired frequencies without hampering the operation of the receiver. By the method band stop filters filtering radio interference can be made "invisible" for the adaptive line equalizer whereby the adaptive equalizers do not need to take part in equalizing the distortion of the system response caused by these band stop filters. The method is suited for modems making use of generally known linear modulation methods: PAM modulation (Pulse Amplitude Modulation), QAM modulation (Quadrature Amplitude Modulation) or CAP modulation (Carrierless Amplitude/Phase coding).

The method is based on the use of the so called Tomlinson-Harashima precoding (in the following termed Tomlinson coding). In the original Tomlinson coding method distortion caused by the channel or part of the distortion is corrected by means of a filter in the transmitter. QAM and CAP modulation produce signals which are of the bandpass type. In these cases the examination can, however, always be carried out by using the commonly known, so called baseband equivalent channel model where the transfer function of the transmission channel is transferred to the baseband and the channel is modelled using a complex baseband transfer function and a complex impulse response. Thus the whole examination can be performed by studying the baseband system.

The invention is based on the equalizer correcting the fixed part H(z) being transferred to the transmitting end of the apparatus.

In more detail the method according to the invention is defined by claim 1.

The apparatus according to the invention, then, is defined by claim 6.

The invention provides considerable benefits.

Radio-frequency interference is effectively filtered without hampering reception.

In the following, the invention is examined in more detail with the aid of a number of working examples with reference to the annexed Figures.

Fig. 1 illustrates a prior-art adaptive equalizer.

Fig. 2 illustrates another prior-art equalizer.

Fig. 3 illustrates a third prior-art equalizer.

Fig. 4 shows an apparatus according to the invention.

Fig. 5 shows another alternative apparatus according to the invention.

Fig. 6 depicts a third alternative apparatus in accordance with the invention.

Fig. 7 illustrates an alternative solution according to the invention to the solution of Fig. 5.

Fig. 8 illustrates an alternative solution according to the invention to the solution of Fig. 6.

In the following description, Z transformation is used to describe transfer functions at the frequency domain.

The following reference numerals are used in the following description to refer to components of the invention or other relevant components.

| | |
|---|---|
| Tomlinson coder | 1 |
| Modified Tomlinson coder | 2 |
| Second modified Tomlinson coder | 3 |
| Third modified Tomlinson coder | 4 |
| Signal value | 5 |
| Level control | 6 |
| Adder | 7 |
| Feedback | 8a to 8c |
| Telecommunication channel | 10 |
| Transmitter band stop filter | 14 |
| Receiver band stop filter | 15 |
| Linear adaptive equalizer | 16 |
| Mapping from bits to symbols | 21 |
| Modulo-operator | 25 |
| Expanded detector (slicer) | 26 |
| Adaptive decision-feedback equalizer | 30 |
| Detector | 35 |
| Transmitted bits | 45 |
| Detected symbol | 46 |
| Transmitter | 50 |

(continued)

| | |
|---|---|
| Receiver | 60 |
| Fourth modified Tomlinson coder | 100 |
| Fifth modified Tomlinson coder | 101 |

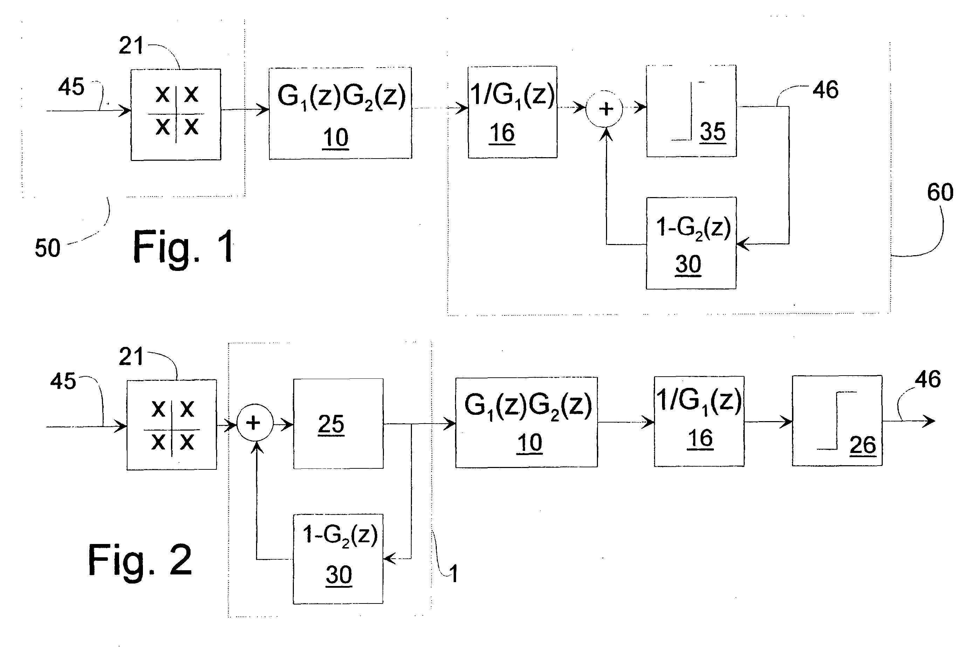

Fig. 1 shows a commonly known adaptive DFE equalizer (cf., e.g., /1/, p. 474) where the adaptive equalizer comprises a linear section 16 ($1/G_1(z)$) and a feedback section 30 ($1 - G_2(z)$) which together equalize the transfer function $G_1(z)G_2(z)$ of channel 10. In addition to the transfer function of the channel itself the transfer function $G_1(z)G_2(z)$ also contains the fixed filters of the transmitter 50 and the receiver 60. In block 21 the bit stream 45 entering the transmitter is grouped into groups having a length ofN bits and these groups of bits are described as one- or two-dimensional symbols. Hereby one symbol conveys N bits of information. In the following the transmitter 50 and the receiver 60 are not separately described but it will be obvious to a person skilled in the art that they are located on both sides of the channel 10, in this presentation such that the transmitter 50 is mainly described on the left-hand side of the figures, the arrows which represent the flow of information progressing from the transmitter 50 towards the receiver 60.

Fig. 2 shows a commonly known construction making use of Tomlinson precoding. The feedback coupled transfer function 30 ($1-G_2(z)$) contained in the coder 1 of the transmitter corrects the section $G_2(z)$ in the transfer function of the channel 10. The feedback loop contains a modulo-operation 25 by means of which the transmission power of the transmitter can be kept constant in spite of the feedback. Using a modulo-operation 25 requires the use of a so called expanded slicer 26 in the receiver. Tomlinson coding and the use of an expanded slicer is a commonly known method which is described, among other sources, in reference /1/ (p. 460 to 464).

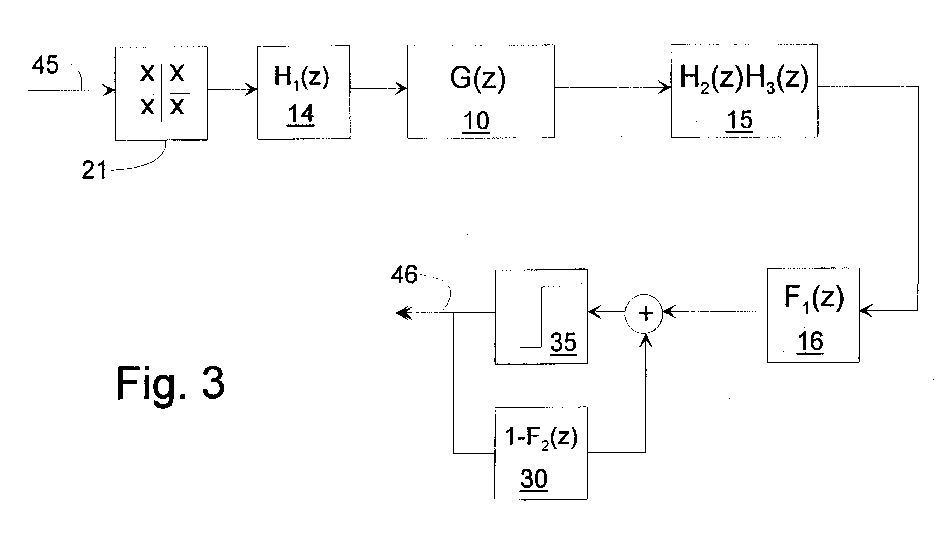

In Fig. 3, band stop filters 14 and 15 are added to the transmitter and the receiver, said filters filtering the signal power of both a transmitted and a received signal at frequencies where the modem may interfere with external radio receivers or where the modem receiver may be interfered with when a signal transmitted by external radio transmitters is connected to a line coupled to the receiver. The transfer function of the channel is indicated by G(z). The band stop filter 15 of the receiver may contain the transfer function $H_2(z)$ of an analogue filter and the transfer function $H_3(z)$ of a digital filter. The analog section $H_2(z)$ is a baseband equivalent of the transfer function of the actual analog filter, because this transfer function is reflected via a frequency modulation in the QAM demodulation or CAP filtering of the receiver. In baseband modems the transfer function $H_2(z)$ directly corresponds to the transfer function of the analog filter. $H_1(z)$ is the transfer function of the band stop filter at the transmission end.

The construction of Fig. 3 is a functional system as such. The adaptive equalizers 16 ($F_1(z)$) and 30 ($1-F_2(z)$) now have to equalize not only the distortion caused by the channel but also the transfer function $H_1(z)H_2(z)H_3(z)$ caused by the band stop filters 14 and 15. Below, this transfer function is labelled H(z). As H(z) is in practice of narrow bandwidth, the equalizers $F_1(z)$ and $1-F_2(z)$ (in practice adaptive FIR filters) must be made of very long duration, whereby their implementation becomes difficult to calculate. A filter which compensates band stop filters could be implemented by means of a fixed filter which would be connected in cascade with the adaptive feedback equalizer. The shared transfer function of the feedback equalizer would then be $1-F_2(z)H(z)$ where $F_2$ is the adaptively controlled section and H the fixed section. It is known, however, that controlling the adaptive section would be very problematic with such a cascade connection. In addition, it is known that using trellis coding would be very difficult if the receiver equalizer were to contain a feedback section.

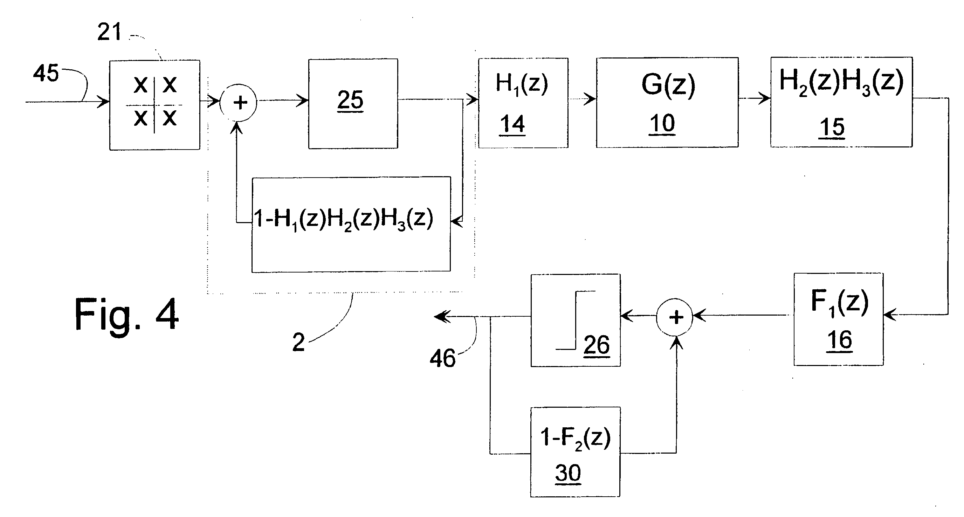

The above-described system can be improved by transferring the fixed equalizer which equalizes the H(z) section to the transmission end in accordance with Fig. 4. As the feedback filter 2 of Fig. 4 may be unstable, a modulo-operation 25 has been added to the mechanism 2 in the manner of a Tomlinson coder. Hereby it is necessary to apply an expanded slicer geometry 26 in the receiver. The basic principle of the method is described in the above-cited reference /1/ (p. 574 to 576) where an outgoing signal is filtered using a band stop filter and the effect of said filter is corrected using Tomlinson coding such that the operation of the receiver is not hampered. In this invention the method is expanded such that even the band stop filters in the receiver are "corrected" by means of the Tomlinson coding 2 at the transmitting end, whereby the band stop filters 14 and 15 do not hamper the operation of the line equalizer of the receiver.

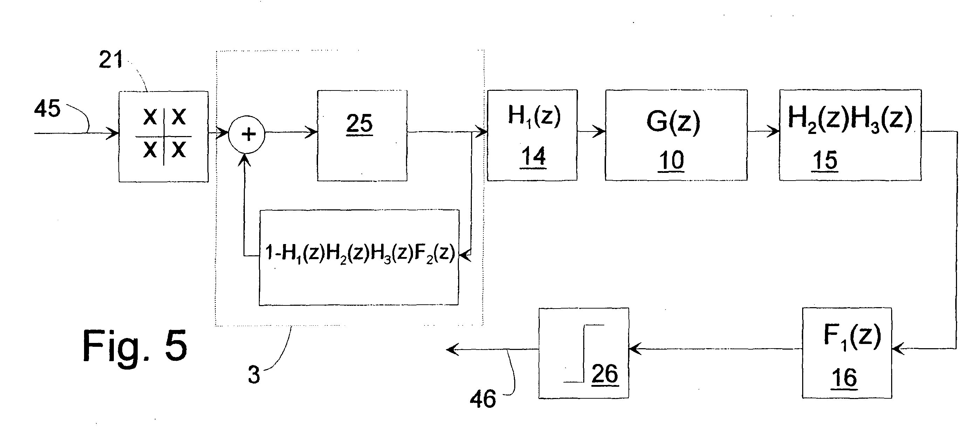

The feedback section 30 ($1-F_2(z)$) of the equalizer of the receiver in Fig. 4 can be transferred to the transmitter to form part of the feedback filter chain of the Tomlinson coder. Fig. 5 illustrates this method where the filter $F_2(z)$ is transferred to form part of the feedback filter chain of the transmitter, the transfer function of the feedback filter 3 hereby being $1-H_1(z)H_2(z)H_3(z)F_2(z)$. The receiver then only contains the linear equalizer 16 in front of the slicer 26, this making the use of channel coding possible. That it is very difficult to use channel coding if the receiver equalizer contains a feedback section is generally known (e.g. /1/, p. 464).

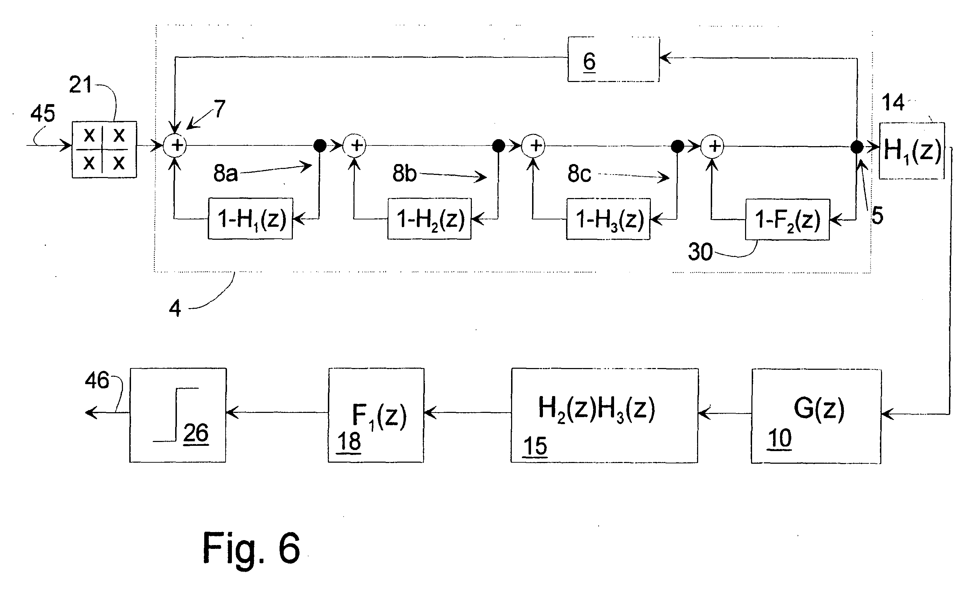

The implementation of the feedback filter in the transmitter of Fig. 5 is often easier if the filter is divided into smaller blocks in cascade connection in accordance with block 4 in Fig. 6. The transfer functions of the filters of the transmitters in Figs. 5 and 6 are the same if the effect of the modulo-operation is not taken into account. The modulo-operation cannot be carried out in accordance with the original Tomlinson coder; instead, a modified method is shown in Fig. 6. The aim is, as in Tomlinson coding, to keep the signal 5 level within the limits -M and M, where M is associated with the signal geometry used such that the relative values of the coordinates of the points in said geometry are

$$-(M-1),-(M-3),\ldots-3,-1,+1,+3,\ldots,(M-3),(M-1)$$

The mechanism depicted in Fig. 6 operates as follows:

a) taking the next symbol value from the symbol description block
b) calculating a filter chain whereby a value is obtained for the signal 5
c) checking in the level control block 6 whether the signal 5 is between the limits - M and +M, and if not, the adder 7 is used to sum a value kM into the input to the filter, where k is a positive or negative integer, such that the signal 5 after this correction is within the target limits -M and M
d) a signal containing the correction term kM calculated above is taken to the feedback connections 8a, 8b, 8c and 5 of the filter; then the correction term is contained in the output signal 5 of the entire filter, keeping it within the desired limits, and in signals fed to the feedback connections of all partial filters.

If two-dimensional signal geometry is used, the above-described level control must be performed separately for both coordinates.

In the same way as a conventional Tomlinson coder (/1/, p. 460 to 464) is analysed, it can be shown that the outgoing signal 5 of the above-described coder is approximately evenly distributed between -M and +M and that successive samples do not correlate with one another. Thus, the spectrum of the outgoing signal before the band stop filters is white, and the coder does not significantly alter the level of the outgoing signal 5.

The above-described mechanism requires that an expanded detector be used in the receiver. This expanded detector is similar to the expanded detector used with the original Tomlinson coder.

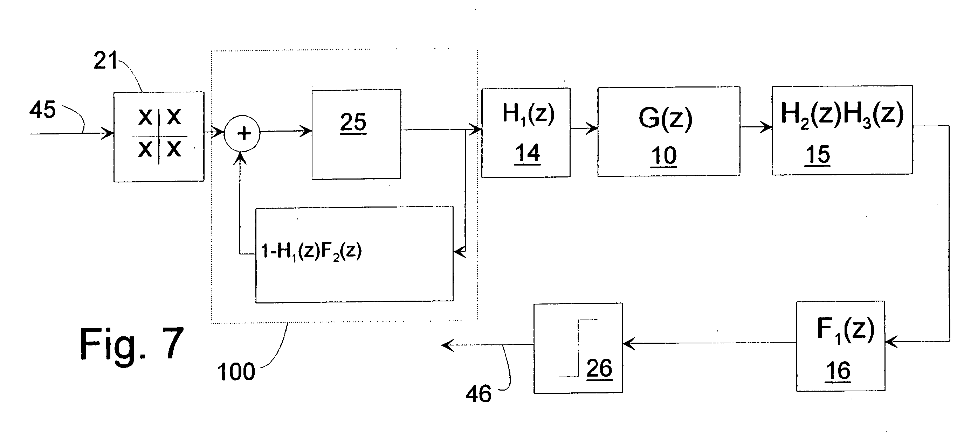

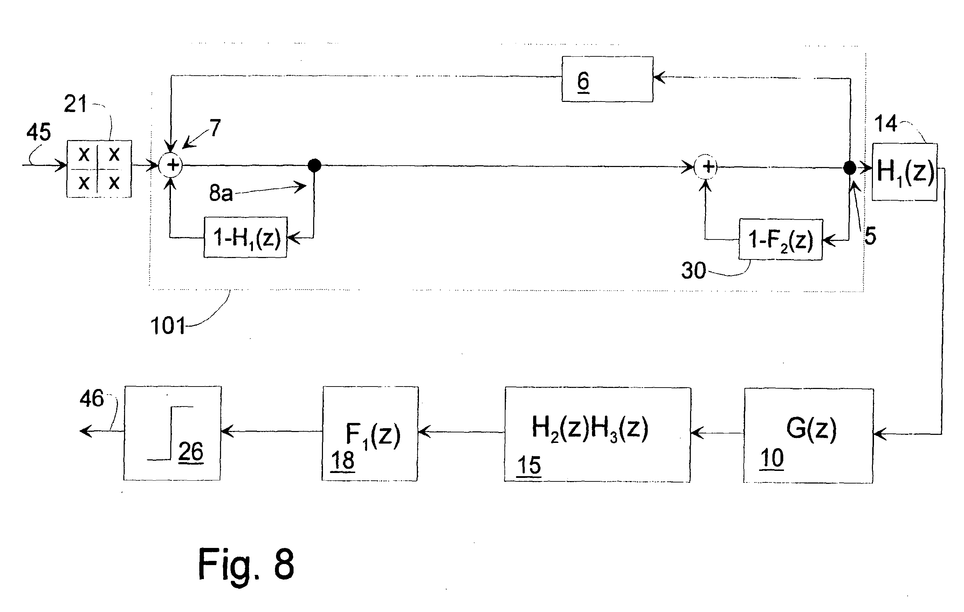

The mechanism of Figs. 5 and 6 can be simplified in accordance with Figs. 7 and 8 by either modifying the digital band stop filter $H_1(z)$ of the transmitter or the digital band stop filter $H_3(z)$ of the receiver such that it is of greater width than the other filters, such that the transfer function of this wider filter alone (with a certain accuracy) determines the transfer function which is common to all band stop filters. Then, if e.g. the stop band of $H_1(z)$ is modified such that it is wider than the others, the following is true:

$$H_1(z)H_2(z)H_3(z) = H_1(z) \quad (1)$$

Then the feedback filter of the transmitter is simplified because the section incorporating $H_2(z)$ and $H_3(z)$ can be omitted whereby the filter merely contains $H_1(z)$.

The method further provides the benefit that the implementation tolerances of the analog band stop filter do not pose problems, if the above condition (1) is met with sufficient accuracy even within the scope of the variations due to the inaccuracy of the components of the analog filter.

Reference /1/: Edward A. Lee, David G. Messerschmitt: Digital Communication, Kluwer Academic Publishers.

## Claims

1. A method for processing a data signal in a telecommunication apparatus comprising a transmitter (50) connected to a first end of a telecommunication channel (10) and a receiver (60) connected to a second end of the telecommunication channel, the method comprising:

    - processing said data signal in the transmitter with a Tomlinson coder (1, 2, 3, 4), the Tomlinson coder producing a transmission signal (5),
    - filtering the transmission signal in the transmitter with a digital transmitter band-stop filter (14), the digital transmitter band-stop filter converting the transmission signal to a filtered transmission signal,

- feeding the filtered transmission signal to the first end of the telecommunication channel, the telecommunication channel conveying the filtered transmission signal to the second end of the telecommunication channel,
- receiving the filtered transmission signal from the second end of the telecommunication channel in the receiver, the filtered transmission signal present at the second end of the telecommunication channel constituting a received signal,
- filtering the received signal in the receiver with a receiver band-stop filter (15), the receiver band-stop filter converting the received signal to a filtered received signal, and
- filtering the filtered received signal in the receiver with a linear adaptive reception equalizer (16), the linear adaptive reception equalizer equalizing at least partially the telecommunication channel,

wherein processing said data signal with said Tomlinson coder (1, 2, 3, 4) comprises equalizing both the digital transmitter band-stop filter and the receiver band-stop filter.

2. A method according to claim 1, **characterized in that** the method further comprises using an adaptive decision feedback equalizer (30) in the receiver for equalizing at least partially the telecommunication channel.

3. A method according to claim **1, characterized in that** the processing said data signal with said Tomlinson coder (1, 2, 3, 4) further comprises equalizing at least partially the telecommunication channel.

4. A method according to claim 1, **characterized in that** said Tomlinson coder (3) is formed of a plurality of successive filter blocks (8a, 8b, 8c, 30) which are feedback connected by means of a level control block (6).

5. A method according to claim 1, **characterized in that** the stop-band of the digital transmitter band-stop filter is wider than the stop-bands of the receiver band-stop filter.

6. A telecommunication apparatus for use in a telecommunication system, the telecommunication apparatus comprising:

- a telecommunication channel (10) having a first end and a second end,
- a transmitter (50),
- a receiver (60),
- in the transmitter a Tomlinson coder (1, 2, 3, 4)
- in the transmitter a digital transmitter band-stop filter (14), a signal input of the digital transmitter band-stop filter being coupled to a signal output of the Tomlinson coder and a signal output of the transmitter band-stop filter being coupled to the first end of the communication channel,
- in the receiver a receiver band-stop filter (15), a signal input of the receiver band-stop filter being coupled to the second end of the communication channel, and
- in the receiver a linear adaptive reception equalizer (16) disposed to equalize at least partially the telecommunication channel, a signal input of the linear adaptive reception equalizer being coupled to a signal output of the receiver band-stop filter,

wherein the Tomlinson coder is adapted to equalize both the digital transmitter band-stop filter and the receiver band-stop filter.

7. A telecommunication apparatus according to claim 6, **characterized in that** the receiver further comprises an adaptive decision feedback equalizer (30).

8. A telecommunication apparatus according to claim 6, **characterized in that** the said Tomlinson coder (3, 4) is adapted to equalize at least partially the telecommunication channel.

9. A telecommunication apparatus according to claim 6, **characterized in that** said Tomlinson coder (3) is formed of a plurality of successive filter blocks (8a, 8b, 8c, 30) which are feedback connected by means of a level control block (6).

10. A telecommunication apparatus according to claim 6, **characterized in that** the stop-band of the digital transmitter band-stop filter is wider than the stop-bands of the receiver band-stop filter.

**Patentansprüche**

1. Ein Verfahren zum Verarbeiten eines Datensignals in einer Telekommunikationseinrichtung, umfassend einen Sender (50), der mit einem ersten Ende eines Telekommunikationskanals (10) verbunden ist und einen Empfänger (60), der mit einem zweiten Ende des Kommunikationskanals verbunden ist, welches Verfahren folgende Schritte enthält:

   - Verarbeitung des Datensignals in dem Sender mit einem Tomlinson-Kodierer (1, 2, 3, 4), wobei der Tomlinson-Kodierer ein Sendesignal (5) erzeugt,
   - Filtern des Sendesignals in dem Sender mit einer digitalen Bandsperre (14), welche digitale Bandsperre das Sendesignal in ein gefiltertes Sendesignal überführt
   - Zuführen des gefilterten Sendesignals zum ersten Ende des Telekommunikationskanals, welcher Telekommunikationskanal das gefilterte Sendesignal zu dem zweiten Ende des Telekommunikationskanals überträgt
   - Empfangen des gefilterten Sendesignals von dem zweiten Ende des Telekommunikationskanals in dem Empfänger, wobei das gefilterte Sendesignal, das an dem zweiten Ende des Telekommunikationskanals anliegt, ein empfangenes Signal bildet
   - Filtern des empfangenen Signals in dem Empfänger mit einer Empfängerbandsperre (15), welche Empfängerbandsperre das empfangene Signal in ein gefiltertes empfangenes Signal überführt, und
   - Filtern des gefilterten empfangenen Signals in dem Empfänger mit einem linearen adaptiven Empfängerequalizer (16), welcher Linearer Adaptiver Empfängerequalizer zumindest teilweise den Telekommunikationskanal glättet/entzerrt, wobei die Verarbeitung des Datensignals mit dem Tomlinson-Kodierer (1, 2, 3, 4) die Glättung/Kompensation/Entzerrung sowohl der digitalen Senderbandsperre als auch der Empfängerbandsperre umfasst.

2. Verfahren nach Anspruch 1, **dadurch gekennzeichnet, dass** das Verfahren weiterhin die Verwendung eines adaptiven Entscheidungsrückkopplungsequalizers (30) in dem Empfänger umfasst, um zumindest teilweise den Telekommunikationskanal zu glätten/zu entzerren.

3. Ein Verfahren nach Anspruch 1, **dadurch gekennzeichnet, dass** die Verarbeitung des Datensignals mit dem Tomlinson-Kodierer (1, 2, 3, 4) weiterhin die zumindest teilweise Glättung/Entzerrung/Kompensation des Telekommunikationskanals umfasst.

4. Verfahren nach Anspruch 1, **dadurch gekennzeichnet, dass** der Tomlinson-Kodierer (3) aus einer Mehrzahl aufeinander folgender Filterblöcke (8a, 8b, 8c, 30) gebildet ist, welche rückkopplungsverbunden sind mittels eines Pegelsteuerungsblocks (6).

5. Verfahren nach Anspruch 1, **dadurch gekennzeichnet, dass** das gesperrte Band der digitalen Bandsperre breiter ist als das gesperrte Band der Empfängerbandsperre.

6. Telekommunikationseinrichtung für die Verwendung in einem Telekommunikationssystem, welche Telekommunikationseinrichtung enthält:

   - einen Telekommunikationskanal (10), der ein erstes und zweites Ende hat,
   - einen Sender (50),
   - einen Empfänger (60),
   - in dem Sender einen Tomlinson-Kodierer (1, 2, 3, 4),
   - in dem Sender eine digitale Senderbandsperre (14), wobei ein Signaleingang der digitalen Senderbandsperre gekoppelt ist mit einem Signalausgang des Tomlinson-Kodierers und ein Signalausgang der Senderbandsperre gekoppelt ist mit dem ersten Ende des Kommunikationskanals, in dem Empfänger eine Empfängerbandsperre (15), wobei ein Signaleingang in der Empfängerbandsperre gekoppelt ist mit dem zweiten Ende des Kommunikationskanals,
   - in dem Empfänger einen linearen adaptiven Empfängerequalizer (16), der vorgesehen ist, um zumindest teilweise den Telekommunikationskanal zu kompensieren/glätten/entzerren, wobei ein Signaleingang des linearen adaptiven Empfängerequalizers gekoppelt ist mit einem Signalausgang der Empfängerbandsperre, wobei der Tomlinson-Kodierer geeignet ist, um sowohl die digitale Senderbandsperre als auch die Empfängerbandsperre zu kompensieren/glätten/entzerren.

7. Eine Telekommunikationseinrichtung nach Anspruch 6, **dadurch gekennzeichnet, dass** der Empfänger weiterhin einen adaptiven Entscheidungsrückkopplungsequalizer (30) aufweist.

8. Eine Telekommunikationseinrichtung nach Anspruch 6, **dadurch gekennzeichnet, dass** der Tomlinson-Kodierer (3, 4) geeignet ist, zumindest teilweise den Telekommunikationskanal zu kompensieren/glätten/entzerren.

9. Telekommunikationseinrichtung nach Anspruch 6, **dadurch gekennzeichnet, dass** der Tomlinson-Kodierer (3) gebildet ist aus einer Mehrzahl aufeinander folgender Filterblöcke (8a, 8b, 8c, 30), die mittels eines Pegelsteuerungsblocks (6) rückkopplungsverbunden sind.

10. Telekommunikationseinrichtung nach Anspruch 6, **dadurch gekennzeichnet, dass** das gesperrte Band der digitalen Senderbandsperre breiter ist als das gesperrte Band der Empfängerbandsperre.

## Revendications

1. Procédé pour traiter un signal de données dans un appareil de télécommunication comprenant un émetteur (50) connecté à une première extrémité d'un canal de télécommunication (10) et un récepteur (60) connecté à une seconde extrémité du canal de télécommunication, le procédé comprenant :

   - le traitement dudit signal de données dans l'émetteur avec un codeur Tomlinson (1, 2, 3, 4), le codeur Tomlinson produisant un signal de transmission (5),
   - le filtrage du signal de transmission dans l'émetteur avec un filtre coupe-bande d'émetteur numérique (14), le filtre coupe-bande d'émetteur numérique convertissant le signal de transmission en un signal de transmission filtré,
   - l'application du signal de transmission filtré à la première extrémité du canal de télécommunication, le canal de télécommunication acheminant le signal de transmission filtré vers la seconde extrémité du canal de télécommunication,
   - la réception du signal de transmission filtré de la seconde extrémité du canal de télécommunication dans le récepteur, le signal de transmission filtré présent au niveau de la seconde extrémité du canal de télécommunication constituant un signal reçu,
   - le filtrage du signal reçu dans le récepteur avec un filtre coupe-bande de récepteur (15), le filtre coupe-bande de récepteur convertissant le signal reçu en un signal reçu filtré, et
   - le filtrage du signal reçu filtré dans le récepteur avec un égaliseur de réception adaptatif linéaire (16), l'égaliseur de réception adaptatif linéaire égalisant au moins partiellement le canal de télécommunication,

   dans lequel le traitement dudit signal de données avec ledit codeur Tomlinson (1, 2, 3, 4) comprend l'égalisation à la fois du filtre coupe-bande d'émetteur numérique et du filtre coupe-bande de récepteur.

2. Procédé selon la revendication 1, **caractérisé en ce que** le procédé comprend en outre l'utilisation d'un égaliseur avec rétroaction de décision adaptatif (30) dans le récepteur pour égaliser au moins partiellement le canal de télécommunication.

3. Procédé selon la revendication 1, **caractérisé en ce que** le traitement dudit signal de données avec ledit codeur Tomlinson (1, 2, 3, 4) comprend en outre l'égalisation au moins partiellement du canal de télécommunication.

4. Procédé selon la revendication 1, **caractérisé en ce que** ledit codeur Tomlinson (3) est formé d'une pluralité de blocs de filtres successifs (8a, 8b, 8c, 30) qui sont connectés par rétroaction au moyen d'un bloc de commande de niveau (6).

5. Procédé selon la revendication 1, **caractérisé en ce que** la bande coupée du filtre coupe-bande d'émetteur numérique est plus large que les bandes coupées du filtre coupe-bande de récepteur.

6. Appareil de télécommunication pour l'utilisation dans un système de télécommunication, l'appareil de télécommunication comprenant :

   - un canal de télécommunication (10) ayant une première extrémité et une seconde extrémité,
   - un émetteur (50),
   - un récepteur (60),
   - dans l'émetteur, un codeur Tomlinson (1, 2, 3, 4)
   - dans l'émetteur, un filtre coupe-bande d'émetteur numérique (14), une entrée de signal du filtre coupe-bande d'émetteur numérique étant couplée à une sortie de signal du codeur Tomlinson et une sortie de signal du filtre coupe-bande d'émetteur étant couplée à la première extrémité du canal de communication,

- dans le récepteur, un filtre coupe-bande de récepteur (15), une entrée de signal du filtre coupe-bande de récepteur étant couplée à la seconde extrémité du canal de communication, et

- dans le récepteur, un égaliseur de réception adaptatif linéaire (16) disposé pour égaliser au moins partiellement le canal de télécommunication, une entrée de signal de l'égaliseur de réception adaptatif linéaire étant couplée à une sortie de signal du filtre coupe-bande de récepteur,

dans lequel le codeur Tomlinson est adapté pour égaliser à la fois le filtre coupe-bande d'émetteur numérique et le filtre coupe-bande de récepteur.

7. Appareil de télécommunication selon la revendication 6, **caractérisé en ce que** le récepteur comprend en outre un égaliseur avec rétroaction de décision adaptatif (30).

8. Appareil de télécommunication selon la revendication 6, **caractérisé en ce que** ledit codeur Tomlinson (3, 4) est adapté pour égaliser au moins partiellement le canal de télécommunication.

9. Appareil de télécommunication selon la revendication 6, **caractérisé en ce que** ledit codeur Tomlinson (3) est formé d'une pluralité de blocs de filtres successifs (8a, 8b, 8c, 30) qui sont connectés par rétroaction au moyen d'un bloc de commande de niveau (6).

10. Appareil de télécommunication selon la revendication 6, **caractérisé en ce que** la bande coupée du filtre coupe-bande d'émetteur numérique est plus large que les bandes coupées du filtre coupe-bande de récepteur.

Fig. 1

Fig. 2

EP 0 978 183 B1

45 →

| X | X |
|---|---|
| X | X |

21

$H_1(z)$
14

$G(z)$
10

$H_2(z)H_3(z)$
15

46

35

$+$

$F_1(z)$
16

$1-F_2(z)$
30

# Fig. 3

EP 0 978 183 B1

Fig. 4

45 → | X | X / X | X | (21) → (+) → | 25 | → | H₁(z) 14 | → | G(z) 10 | → | H₂(z)H₃(z) 15 |

| 1-H₁(z)H₂(z)H₃(z) | (2)

| 1-F₂(z) 30 | → | 26 | ← (+) ← | F₁(z) 16 |

46

Fig. 5

Fig. 6

Fig. 7

EP 0 978 183 B1

Fig. 8

EP 0 978 183 B1